# FASCICULE DE BREVET EUROPEEN

(11) **EP 3 842 649 B1**
(45) Date de publication et mention de la délivrance du brevet: **14.09.2022**
(21) Numéro de dépôt: 20215182.5
(22) Date de dépôt: 17.12.2020
(51) Int. Cl.: F16C 19/36, F16C 33/46, F16C 41/04

(54) **CAGE DE RÉTENTION DE ROULEAUX CONIQUES DANS UN PALIER À ROULEMENT**
RÜCKHALTEKÄFIG VON KONISCHEN ROLLEN IN EINEM WÄLZLAGER
CAGE FOR RETAINING TAPERED ROLLERS IN A ROLLER BEARING

(30) Priorité: 19.12.2019 FR 1914923
(43) Date de publication de la demande: 30.06.2021
(73) Titulaire: NTN-SNR ROULEMENTS, 74000 Annecy (FR)
(72) Inventeur: GUIGLI, Vincent, 74900 Cran Gevrier (FR)
(74) Mandataire: Sayettat, Julien Christian

(56) Documents cités:
- EP-A1- 2 982 878
- DE-A1- 19 740 435
- DE-A1-102009 053 090
- DE-A1-102015 211 200

## Description

L'invention concerne une cage de rétention de rouleaux coniques dans un palier à roulement, ainsi qu'un ensemble comprenant une telle cage et des rouleaux coniques retenus dans ladite cage.

On connaît des cages, notamment obtenues par moulage d'une matière thermoplastique, qui présentent deux couronnes espacées axialement par une pluralité de ponts, lesdits ponts présentant chacun deux parois latérales formant entre chacun des ponts adjacents et un segment de chacune desdites couronnes un cadre périphérique dans lequel un rouleau conique est retenu en pouvant tourner autour de son axe propre. Une telle cage est décrite dans le document EP2982878.

Pour assembler un palier à roulement, des rouleaux sont d'abord introduits dans leur cadre respectif et l'ensemble cage / rouleaux est disposé entre deux organes dudit palier pour permettre leur rotation relative. Ainsi, pour faciliter cet assemblage, il est souhaitable que la cage assure le maintien des rouleaux durant la manipulation de l'ensemble cage / rouleaux.

Pour ce faire, on connaît des cages dans lesquelles chacune des parois latérales des ponts présente une portée extérieure qui s'étend extérieurement suivant un angle convergeant vers la portée extérieure d'une paroi latérale adjacente, afin de former entre lesdites portées extérieures un rétrécissement extérieur empêchant une sortie par l'extérieur des rouleaux coniques retenus dans les cadres périphériques.

Ces solutions ne donnent pas entière satisfaction, en ce que les cages ne permettent pas de retenir les rouleaux coniques depuis leur côté intérieur. Ainsi, les possibilités de manipulation de l'ensemble cage / rouleaux sont limitées, ce qui contraint l'assemblage du palier à roulement.

L'invention vise à perfectionner l'art antérieur en proposant notamment une cage de rétention qui est agencée pour assurer une bonne rétention des rouleaux coniques dans leur cadre périphérique respectif durant la manipulation de ladite cage, et ce tout en étant facile à fabriquer, notamment par moulage dans un poids limité, et en ne contraignant pas l'introduction des rouleaux dans leur cadre respectif.

A cet effet, selon un premier aspect, l'invention propose une cage de rétention de rouleaux coniques dans un palier à roulement, ladite cage présentant deux couronnes espacées axialement par une pluralité de ponts présentant chacun deux parois latérales formant entre chacun des ponts adjacents et un segment de chacune desdites couronnes un cadre périphérique dans lequel un rouleau conique est retenu en pouvant tourner autour de son axe propre, chacune desdites parois latérales présentant une portée extérieure s'étendant extérieurement suivant un angle convergeant vers la portée extérieure d'une paroi latérale adjacente afin de former entre lesdites portées extérieures un rétrécissement extérieur empêchant une sortie par l'extérieur des rouleaux coniques retenus dans le cadre périphérique, chacune des parois latérales présentant deux portées intérieures respectivement externe et interne qui sont séparées par une marche, chacune desdites portées intérieures convergeant vers le centre de la cage sur une distance qui est suffisante pour former entre deux portées intérieures internes - respectivement externes - adjacentes un rétrécissement interne - respectivement externe - empêchant une sortie par l'intérieur des rouleaux coniques retenus dans le cadre périphérique.

Selon un deuxième aspect, l'invention propose un ensemble comprenant une telle cage de rétention et des rouleaux coniques retenus dans respectivement un cadre périphérique de ladite cage, dans lequel chacun des rétrécissements forme un jeu dont la dimension est inférieure au diamètre extérieur des rouleaux de sorte à empêcher une sortie des rouleaux coniques retenus dans le cadre périphérique lors de la manipulation dudit ensemble.

D'autres objets et avantages de l'invention apparaîtront dans la description qui suit, faite en référence aux figures jointes, dans lesquelles :

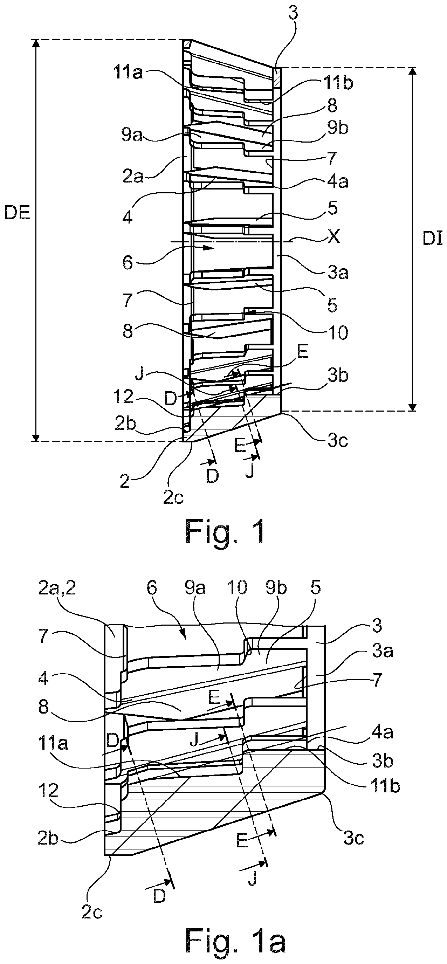

[Fig.1] est une représentation en coupe axiale d'une cage de rétention selon un mode de réalisation de l'invention,
[Fig.1a] étant une vue agrandie de la zone inférieure de la figure 1 ;
[Fig.2a],
[Fig.2b] et
[Fig.2c] sont des représentations en coupe suivant respectivement le plan D-D (figure 2a), le plan E-E (figure 2b) et le plan J-J (figure 2c) des figures 1 et 1a, ces plans de coupe étant chacun perpendiculaires à l'axe de rotation d'un rouleau conique ;
[Fig.3] est une vue agrandie du pont représenté en coupe axiale sur les figures 1 et 1a, un rouleau conique étant représenté en pointillés.

En relation avec ces figures, on décrit ci-dessous une cage de rétention de rouleaux coniques 1 dans un palier à roulement, ainsi qu'un ensemble comprenant une telle cage et des rouleaux coniques 1 retenus dans ladite cage.

Pour faciliter sa fabrication, la cage peut être formée en une seule pièce, notamment par moulage d'un matériau polymère. En particulier, la cage peut être réalisée à base de polyamide.

La cage peut être montée dans un palier à roulement comprenant deux organes qui sont chacun pourvus d'une piste annulaire de roulement, lesdites pistes étant espacées entre elles pour former un espace de roulement dans lequel des rouleaux coniques 1 sont disposés en étant retenus dans ladite cage, afin de permettre une rotation relative desdits organes autour d'un axe qui est confondu avec l'axe X de révolution de ladite cage.

La cage de rétention est agencée pour assurer, notamment lors de la rotation du palier, le maintien des rouleaux coniques 1 dans l'espace de roulement en permettant la rotation desdits rouleaux sur les pistes de roulement, et ce en empêchant tout contact entre lesdits rouleaux afin de ne pas contraindre leur rotation respective.

Pour ce faire, la cage de rétention présente une couronne externe 2 et une couronne interne 3 espacées axialement par une pluralité de ponts 4, lesdits ponts étant répartis circonférentiellement en s'étendant axialement entre lesdites couronnes.

En particulier, comme représenté sur la figure 1, la couronne interne 3 présente un diamètre DI qui est inférieur au diamètre DE de la couronne externe 2, afin de permettre le montage de la cage dans un palier à rouleaux coniques.

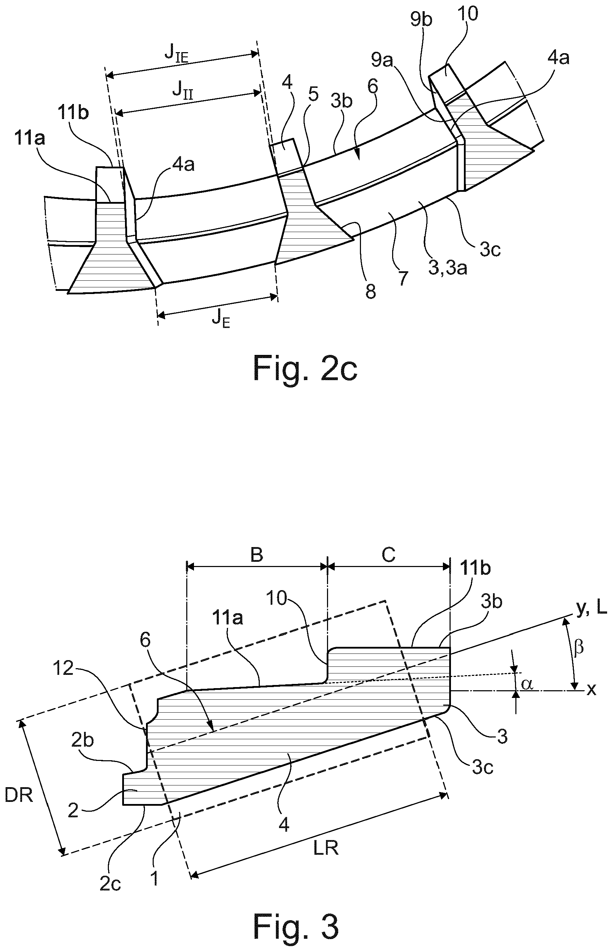

Dans la description :
- les termes « extérieur » et « intérieur » sont définis par rapport à l'axe X de la cage, respectivement pour une localisation éloignée et proche dudit axe ;
- les termes « interne » et « externe » sont définis par rapport à des positions représentées respectivement à droite et à gauche sur les figures 1, 1a et 3 ;
- les termes « axial » et « radial » sont définis par rapport à l'axe X, pour une direction suivant cet axe et s'éloignant ou se rapprochant de lui.

Les ponts 4 présentent chacun deux parois latérales 5 qui forment entre chacun des ponts 4 adjacents et un segment 2a, 3a de chacune des couronnes 2, 3 un cadre périphérique 6 dans lequel un rouleau conique 1 est retenu en pouvant tourner autour de son axe propre Y.

La géométrie des cadres 6 peut être agencée pour pouvoir disposer les rouleaux coniques 1 en appui circonférentiel de part et d'autre sur respectivement une paroi latérale 5 d'un pont 4, les parois latérales 5 pouvant présenter un profil de géométrie complémentaire à celle de la périphérie desdits rouleaux coniques pour faciliter leur roulement sur lesdites parois latérales.

En outre, chaque segment 2a, 3a comprend une face intérieure 7 qui est disposée en regard axial d'une face d'un rouleaux conique 1, lesdites faces intérieures pouvant présenter un profil de géométrie complémentaire à celle des faces desdits rouleaux pour faciliter le roulement desdits rouleaux sur elles.

Comme représenté notamment sur la figure 3, le cadre périphérique 6 s'étend suivant une direction longitudinale L qui est parallèle à l'axe Y du rouleau 1 maintenu dans ledit cadre, la direction L étant inclinée d'un angle β par rapport à l'axe X de la cage.

Chacune des parois latérales 5 présente une portée extérieure 8 s'étendant extérieurement suivant un angle convergeant vers la portée extérieure 8 d'une paroi latérale 5 adjacente, afin de former entre lesdites portées extérieures un rétrécissement extérieur empêchant une sortie par l'extérieur des rouleaux coniques 1 retenus dans le cadre périphérique 6.

En outre, chacune des parois latérales 5 présente deux portées intérieures respectivement externe 9a et interne 9b qui sont séparées par une marche 10, chacune des portées intérieures 9a, 9b convergeant vers le centre de la cage sur une distance qui est suffisante pour former entre deux portées intérieures internes 9b - respectivement externes 9a - adjacentes un rétrécissement interne - respectivement externe - empêchant une sortie par l'intérieur des rouleaux coniques 1 retenus dans le cadre périphérique 6.

Ainsi, la cage permet de maintenir les rouleaux 1 aussi bien de son côté intérieur que de son côté extérieur, ce qui permet de limiter de façon optimale le risque de chute des rouleaux hors de ladite cage. De ce fait, on facilite la manipulation de l'ensemble cage / rouleaux 1, et donc son montage dans un palier à roulement.

En particulier, l'agencement des portées intérieures 9a, 9b permet à la fois de maintenir un rouleau 1 dans le cadre 6 et d'introduire ledit rouleau dans ledit cadre en passant par le côté intérieur de la cage, puisque l'agencement des portées extérieures 8 convergentes ne permet pas de monter le rouleau 1 par le côté extérieur.

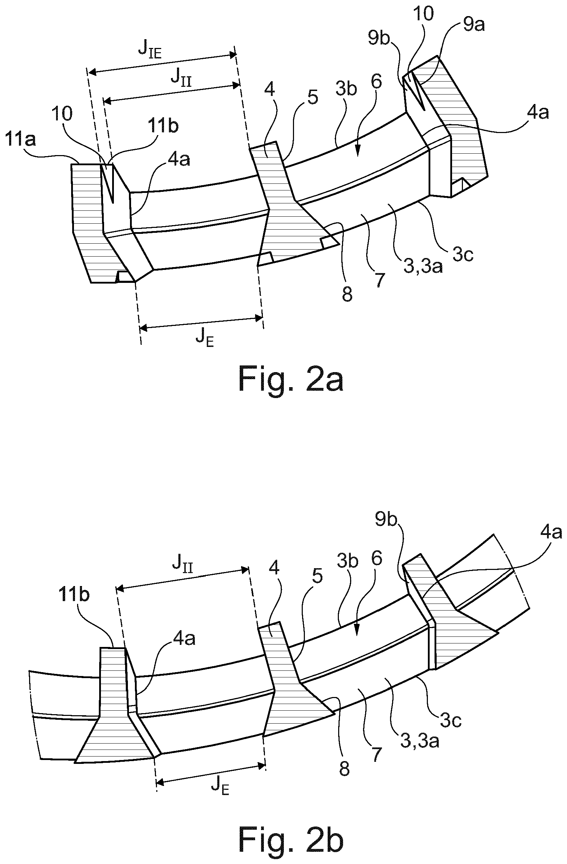

Comme représenté sur les figures 2a, 2b et 2c, chacun des rétrécissements extérieur et intérieurs forme un jeu JE, JIE et JII dont la dimension est inférieure au diamètre extérieur DR des rouleaux 1 à l'emplacement desdits jeux, lesdits jeux permettant d'empêcher une sortie desdits rouleaux retenus dans le cadre périphérique 6 lors de la manipulation de l'ensemble cage / rouleaux 1.

L'agencement des portées intérieures 9a, 9b, et notamment leur séparation par une marche 10, permet d'assurer un maintien efficace d'un rouleau 1 sur deux zones de contact tout en limitant la quantité de matière du côté intérieur de la cage.

Ainsi, il est possible de limiter le poids total de la cage, et donc du palier à roulement, mais aussi de réduire les frottements contre les rouleaux 1, afin de ne pas entraver leur rotation. Cet agencement permet également de faciliter le démoulage de la cage lors de sa fabrication, et de faciliter le montage des rouleaux 1 dans les cadres périphériques 6 par déformation de ladite cage.

Chacune des portées intérieures 9a, 9b présente un bord libre 11a, 11b s'étendant entre les deux couronnes 2, 3 sur une dimension axiale B, C respective.

Dans le mode de réalisation représenté, la marche 10 s'étend sensiblement radialement, le bord libre 11b de la portée intérieure interne 9b s'étendant sensiblement axialement. En variante, la marche 10 peut présenter un angle de contre-dépouille favorable au démoulage axial de la cage.

Par ailleurs, pour permettre le démoulage axial de la cage, le bord libre 11a de la portée intérieure externe 9a forme un angle α avec l'axe X de la cage, α étant strictement supérieur à 0. En particulier, comme représenté sur la figure 3, l'angle α est strictement compris entre 0 et l'angle β d'inclinaison du cadre 6 par rapport à l'axe X.

Les dimensions axiales B, C respectives des bords libres 11a, 11b sont agencées pour permettre à la fois un bon maintien des rouleaux coniques 1 sur les portées intérieures 9a, 9b et un démoulage facile de la cage durant sa fabrication.

Dans le mode de réalisation représenté, la dimension axiale C du bord libre 11b de la portée intérieure interne 9b est inférieure à la dimension axiale B du bord libre 11a de la portée intérieure externe 9a.

De façon avantageuse, le cadre périphérique 6 s'étend sur une dimension LR suivant sa direction longitudinale L, les dimensions B et C étant telles que :
- 0,2 LR < B < 0,8 LR ; et/ou
- 0,1 LR<C<0,7LR.

Comme représenté sur les figures 1 et 1a, la couronne interne 3 s'étend entre deux bords périphériques respectivement intérieur 3b et extérieur 3c, les ponts 4 présentant un bord interne 4a qui est associé à la couronne interne 3 entre lesdits bords périphériques.

En particulier, les bords libres 11b des portées intérieures internes 9b sont disposés dans l'alignement du bord périphérique intérieur 3b de la couronne interne 3, ce qui permet de faciliter la conception du moule, la fabrication et le démoulage de la cage.

De même, la couronne externe 2 s'étend entre un bord périphérique intérieur 2b et un bord périphérique extérieur 2c, les bords libres 11a des portées intérieures externes 9a étant reliées au bord périphérique intérieur 2b par un épaulement 12 présentant une dimension radiale de raccordement.

## Revendications

1. Cage de rétention de rouleaux coniques (1) dans un palier à roulement, ladite cage présentant deux couronnes (2, 3) espacées axialement par une pluralité de ponts (4) présentant chacun deux parois latérales (5) formant entre chacun des ponts (4) adjacents et un segment (2a, 3a) de chacune desdites couronnes un cadre périphérique (6) dans lequel un rouleau conique (1) est retenu en pouvant tourner autour de son axe propre (Y), chacune desdites parois latérales présentant une portée extérieure (8) s'étendant extérieurement suivant un angle convergeant vers la portée extérieure (8) d'une paroi latérale (5) adjacente afin de former entre lesdites portées extérieures un rétrécissement extérieur empêchant une sortie par l'extérieur des rouleaux coniques (1) retenus dans le cadre périphérique (6), ladite cage étant **caractérisée en ce que** chacune des parois latérales (5) présente deux portées intérieures respectivement externe (9a) et interne (9b) qui sont séparées par une marche (10), chacune desdites portées intérieures convergeant vers le centre de la cage sur une distance qui est suffisante pour former entre deux portées intérieures internes (9b) - respectivement externes (9a) - adjacentes un rétrécissement interne - respectivement externe - empêchant une sortie par l'intérieur des rouleaux coniques (1) retenus dans le cadre périphérique (6).

2. Cage de rétention selon la revendication 1, **caractérisée en ce que** la marche (10) s'étend sensiblement radialement.

3. Cage de rétention selon l'une des revendications 1 ou 2, **caractérisée en ce que** chacune des portées intérieures (9a, 9b) présente un bord libre (11a, 11b) s'étendant entre les deux couronnes (2, 3) sur une dimension axiale B, C respective.

4. Cage de rétention selon la revendication 3, **caractérisée en ce que** le bord libre (11b) de la portée intérieure interne (9b) s'étend sensiblement axialement.

5. Cage de rétention selon l'une des revendications 3 ou 4, **caractérisé en ce que** le bord libre (11a) de la portée intérieure externe (9a) forme un angle α avec l'axe (X) de la cage.

6. Cage de rétention selon l'une quelconque des revendications 1 à 5, **caractérisée en ce que** le cadre périphérique (6) est incliné d'un angle β par rapport à l'axe (X) de la cage.

7. Cage de rétention selon la revendication 6 lorsqu'elle dépend de la revendication 5, **caractérisée en ce que** α est strictement compris entre 0 et β.

8. Cage de rétention selon l'une quelconque des revendications 1 à 7, **caractérisée en ce que** la couronne interne (3) présente un diamètre (DI) qui est inférieur au diamètre (DE) de la couronne externe (2).

9. Cage de rétention selon l'une quelconque des revendications 3 à 8, **caractérisée en ce que** la dimension axiale C du bord libre (11b) de la portée intérieure interne (9b) est inférieure à la dimension axiale B du bord libre (11a) de la portée intérieure externe (9a).

10. Cage de rétention selon l'une quelconque des revendication 3 à 9, **caractérisée en ce que** le cadre périphérique (6) s'étend sur une dimension LR, la dimension B du bord libre (11a) de la portée intérieure externe (9a) étant telle que : 0,2 LR < B < 0,8 LR.

11. Cage de rétention selon l'une quelconque des revendication 3 à 10, **caractérisée en ce que** la cadre périphérique (6) s'étend sur une dimension LR, la dimension C du bord libre (11b) de la portée intérieure interne (9b) étant telle que : 0,1 LR < C < 0,7 LR.

12. Cage de rétention selon l'une quelconque des revendications 1 à 11, **caractérisé en ce que** la couronne interne (3) s'étend entre un bord périphérique intérieur (3b) et un bord périphérique extérieur (3c), les ponts (4) présentant un bord interne (4a) qui est associé à la couronne interne (3) entre lesdits bords périphériques.

13. Cage de rétention selon la revendication 12, lorsqu'elle dépend de la revendication 3, **caractérisée en ce que** les bords libres (11b) des portées intérieures internes (9b) sont disposés dans l'alignement du bord périphérique intérieur (3b) de la couronne interne (3).

14. Cage de rétention selon l'une quelconque des revendications 3 à 13, **caractérisée en ce que** la couronne externe (2) s'étend entre un bord périphérique intérieur (2b) et un bord périphérique extérieur (2c), les bords libres (11a) des portées intérieures externes (9a) étant reliés audit bord périphérique intérieur par un épaulement (12) présentant une dimension radiale de raccordement.

15. Cage de rétention selon l'une quelconque des revendications 1 à 14, **caractérisée en ce qu'**elle est formée en une pièce, notamment par moulage d'un matériau polymère.

16. Ensemble comprenant une cage de rétention selon l'une quelconque de revendications 1 à 15 et des rouleaux coniques (1) retenus dans respectivement un cadre périphérique (6) de ladite cage, dans lequel chacun des rétrécissements forme un jeu (JE, JIE, JII) dont la dimension est inférieure au diamètre extérieur (DR) des rouleaux (1) à l'emplacement desdits jeux de sorte à empêcher une sortie des rouleaux coniques (1) retenus dans le cadre périphérique (6) lors de la manipulation dudit ensemble.

## Patentansprüche

1. Rückhaltekäfig von konischen Rollen (1) in einem Wälzlager, wobei der Käfig zwei Kränze (2, 3) aufweist, die axial durch eine Vielzahl von Brücken (4) beabstandet sind, die jeweils zwei Seitenwände (5) aufweisen, die zwischen jeder der benachbarten Brücken (4) und einem Segment (2a, 3a) jedes der Kränze einen Umfangsrahmen (6) formen, in dem eine konische Rolle (1) so gehalten wird, dass sie sich um ihre eigene Achse (Y) drehen kann, wobei jede der Seitenwände einen Außenträger (8) aufweist, der sich entlang einem Winkel nach außen erstreckt, der zum Außenträger (8) einer benachbarten Seitenwand (5) konvergiert, um zwischen den Außenträgern eine externe Verjüngung zu formen, die ein Austreten der in dem Umfangsrahmen (6) gehaltenen konischen Rollen (1) nach außen zu verhindern, wobei der Käfig **dadurch gekennzeichnet ist, dass** jede der Seitenwände (5) zwei jeweils externe (9a) und interne (9b) Innenträger aufweist, die durch eine Stufe (10) getrennt sind, wobei jeder der Innenträger zum Mittelpunkt des Käfigs über einen Abstand konvergiert, der ausreicht, um zwischen zwei benachbarten internen (9b) - bzw. externen (9a) - Innenträgern eine interne - bzw. externe - Verjüngung zu formen, die ein Austreten der in dem Umfangsrahmen (6) gehaltenen konischen Rollen (1) nach innen verhindert.

2. Rückhaltekäfig nach Anspruch 1, **dadurch gekennzeichnet, dass** sich die Stufe (10) im Wesentlichen radial erstreckt.

3. Rückhaltekäfig nach einem der Ansprüche 1 oder 2, **dadurch gekennzeichnet, dass** jeder der Innenträger (9a, 9b) einen freien Rand (11a, 11b) aufweist, der sich zwischen den beiden Kränzen (2, 3) über eine jeweilige Axialdimension B, C erstreckt.

4. Rückhaltekäfig nach Anspruch 3, **dadurch gekennzeichnet, dass** sich der freie Rand (11b) des internen Innenträgers (9b) im Wesentlichen axial erstreckt.

5. Rückhaltekäfig nach einem der Ansprüche 3 oder 4, **dadurch gekennzeichnet, dass** der freie Rand (11a) des externen (9a) Innenträgers einen Winkel α mit der Achse (X) des Käfigs formt.

6. Rückhaltekäfig nach einem der Ansprüche 1 bis 5, **dadurch gekennzeichnet, dass** der Umfangsrahmen (6) in einem Winkel β bezüglich der Achse (X) des Käfigs geneigt ist.

7. Rückhaltekäfig nach Anspruch 6, in Abhängigkeit von Anspruch 5, **dadurch gekennzeichnet, dass** α genau zwischen 0 und β liegt.

8. Rückhaltekäfig nach einem der Ansprüche 1 bis 7, **dadurch gekennzeichnet, dass** der interne Kranz (3) einen Durchmesser (DI) aufweist, der kleiner als der Durchmesser (DE) des externen Kranzes (2) ist.

9. Rückhaltekäfig nach einem der Ansprüche 3 bis 8, **dadurch gekennzeichnet, dass** die Axialdimension C des freien Rands (11b) des internen (9b) Innenträgers kleiner als die Axialdimension B des freien Rands (11a) des externen Innenträgers (9a) ist.

10. Rückhaltekäfig nach einem der Ansprüche 3 bis 9, **dadurch gekennzeichnet, dass** sich der Umfangsrand (6) über eine Dimension LR erstreckt, wobei die Dimension B des freien Rands (11a) des externen Innenträgers (9a) so ist, dass: 0,2 LR < B < 0,8 LR.

11. Rückhaltekäfig nach einem der Ansprüche 3 bis 10, **dadurch gekennzeichnet, dass** sich der Umfangskäfig (6) über eine Dimension LR erstreckt, wobei die Dimension C des freien Rands (11b) des internen (9b) Innenträgers so ist, dass: 0,1 LR < C < 0,7 LR.

12. Rückhaltekäfig nach einem der Ansprüche 1 bis 11, **dadurch gekennzeichnet, dass** sich der interne Kranz (3) zwischen einem internen (3b) Umfangsrand und einem externen (3c) Umfangsrand erstreckt, wobei die Brücken (4) einen internen (4a) Rand aufweisen, der zwischen den Umfangsrändern mit dem internen Kranz (3) verbunden ist.

13. Rückhaltekäfig nach Anspruch 12, in Abhängigkeit von Anspruch 3, **dadurch gekennzeichnet, dass** die freien Ränder (11b) der internen (9b) Innenträger in Ausrichtung auf den internen (3b) Umfangsrand des internen Kranzes (3) angeordnet sind.

14. Rückhaltekäfig nach einem der Ansprüche 3 bis 13, **dadurch gekennzeichnet, dass** sich der externe Kranz (2) zwischen einem internen (2b) Umfangsrand und einem externen (2c) Umfangsrand erstreckt, wobei die freien Ränder (11a) der externen (9a) Innenträger über einen Absatz (12), der eine Radialdimension der Verbindung darstellt, mit dem internen Umfangsrand verbunden sind.

15. Rückhaltekäfig nach einem der Ansprüche 1 bis 14, **dadurch gekennzeichnet, dass** sie aus einem Stück geformt ist, insbesondere durch Gießen eines Polymermaterials.

16. Gruppe, umfassend einen Rückhaltekäfig nach einem der Ansprüche 1 bis 15 und konische Rollen (1), die jeweils in einem Umfangsrahmen (6) des Käfigs gehalten werden, wobei jede der Verjüngungen ein Spiel (JE, JIE, JII) formt, deren Dimension kleiner als der Außendurchmesser (DR) der Rollen (1) an der Stelle des jeweiligen Spiels ist, um ein Austreten der im Umfangsrahmen (6) gehaltenen konischen Rollen (1) bei einer Manipulation der Gruppe zu verhindern.

## Claims

1. Cage for retaining tapered rollers (1) in a roller bearing, said cage having two rings (2, 3) spaced apart axially by a plurality of bridges (4) each having two lateral walls (5) forming between each of the adjacent bridges (4) and a segment (2a, 3a) of each of said rings a peripheral frame (6) wherein a tapered roller (1) is held while being able to rotate about its own axis (Y), each of said lateral walls having an exterior surface (8) extending externally at an angle converging towards the exterior surface (8) of an adjacent lateral wall (5) in order to form between said exterior surfaces an exterior narrowing preventing the tapered rollers (1) held in the peripheral frame (6) from emerging to the outside, said cage being **characterised in that** each of the lateral walls (5) has two adjacent interior surfaces respectively external (9a) and internal (9b), which are separated by a step (10), each of said interior surfaces converging towards the centre of the cage over a distance that is sufficient to form between two adjacent internal (9b) - and respectively external (9a) - interior surfaces an internal - or respectively external - narrowing preventing the tapered rollers (1) held in the peripheral frame (6) from emerging to the inside.

2. Holding cage according to claim 1, **characterised in that** the step (10) extends substantially radially.

3. Holding cage according to one of claims 1 or 2, **characterised in that** each of the interior surfaces (9a, 9b) has a free edge (11a, 11b) extending between the two rings (2, 3) over a respective axial dimension B, C.

4. Holding cage according to claim 3, **characterised in that** the free edge (11b) of the internal interior surface (9b) extends substantially axially.

5. Holding cage according to one of claims 3 or 4, **characterised in that** the free edge (11a) of the external interior surface (9a) forms an angle α with the axis (X) of the cage.

6. Holding cage according to any one of claims 1 to 5, **characterised in that** the peripheral frame (6) is inclined by an angle β with respect to the axis (X) of the cage.

7. Holding cage according to claim 6 when it is dependent on claim 5, **characterised in that** α is strictly between 0 and β.

8. Holding cage according to any one of claims 1 to 7, **characterised in that** the internal ring (3) has a diameter (DI) that is less than the diameter (DE) of the external ring (2).

9. Holding cage according to any one of claims 3 to 8, **characterised in that** the axial dimension C of the free edge (11b) of the internal interior surface (9b) is less than the axial dimension B of the free edge (11a) of the external interior surface (9a).

10. Holding cage according to any one of claims 3 to 9, **characterised in that** the peripheral frame (6) extends over a dimension LR, the dimension B of the free edge (11a) of the external interior surface (9a) being such that: 0.2 LR < B < 0.8 LR.

11. Holding cage according to any one of claims 3 to 10, **characterised in that** the peripheral frame (6) extends over a dimension LR, the dimension C of the free edge (11b) of the internal interior surface (9b) being such that: 0.1 LR < C < 0.7 LR.

12. Holding cage according to any one of claims 1 to 11, **characterised in that** the internal ring (3) extends between an interior peripheral edge (3b) and an exterior peripheral edge (3c), the bridges (4) having an internal edge (4a) that is associated with the internal ring (3) between said peripheral edges.

13. Holding cage according to claim 12 when it is dependent on claim 3, **characterised in that** the free edges (11b) of the internal interior surfaces (9b) are disposed in line with the interior peripheral edge (3b) of the internal ring (3).

14. Holding cage according to any one of claims 3 to 13, **characterised in that** the external ring (2) extends between an interior peripheral edge (2b) and an exterior peripheral edge (2c), the free edges (11a) of the external interior surfaces (9a) being connected to said interior peripheral edge by a shoulder (12) having a radial connecting dimension.

15. Holding cage according to any one of claims 1 to 14, **characterised in that** it is formed in one piece, in particular by moulding a polymer material.

16. Assembly comprising a holding cage according to any one of claims 1 to 15 and tapered rollers (1) held in respectively a peripheral frame (6) of said cage, wherein each of the narrowings forms a set (JE, JIE, JII) the dimension of which is less than the outside diameter (DR) of the rollers (1) at the location of said sets so as to prevent the tapered rollers (1) held in the peripheral frame (6) from emerging when said assembly is manipulated.
